# EUROPEAN PATENT SPECIFICATION

(11) **EP 2 611 224 B1**
(45) Date of publication and mention of the grant of the patent: **28.12.2016**
(21) Application number: 11819321.8
(22) Date of filing: 18.05.2011
(51) Int. Cl.: H04W 4/02, G01S 19/00, H04M 1/725

(54) **MOBILE TERMINAL AND SETUP INFORMATION UPDATING METHOD AND DEVICE THEREOF**
MOBILES ENDGERÄT SOWIE VERFAHREN UND VORRICHTUNG ZUR AKTUALISIERUNG VON SETUP-INFORMATIONEN DAFÜR
TERMINAL MOBILE ET PROCÉDÉ DE MISE À JOUR D'INFORMATIONS DE RÉGLAGE, ET DISPOSITIF CORRESPONDANT

(30) Priority: 26.08.2010 CN 201010265463
(43) Date of publication of application: 03.07.2013
(73) Proprietor: Huizhou TCL Mobile Communication Co., Ltd., Huizhou, Guangdong 516006 (CN)
(72) Inventor: YANG, Zhibing, Guangdong 516006 (CN)
(74) Representative: Brachmann, Roland W.
(86) International application number: PCT/CN2011/074268
(87) International publication number: WO 2012/024946

(56) References cited:
- CN-A- 1 854 751
- CN-A- 1 854 751
- CN-A- 101 017 364
- CN-A- 101 350 855
- CN-A- 101 742 401
- CN-A- 101 754 367
- CN-A- 101 754 367
- CN-A- 101 938 694
- CN-K1- 101 754 367
- JP-A- H0 755 965

## Description

The invention belongs to the technical field of mobile terminals, and in particular to a mobile terminal and a method and device for updating the setup information thereof.

With the continuous development of the mobile terminal technology, users have increasing requirements on functions of mobile terminals.

Take mobile phones as example, the activity range increasingly extends as the social circle of people expands, for example, flying to America from China on a business trip; and the international trade becomes abundant: mobile phones in a same model are sold to both France and Korea; these may cause that mobile phones in a same type may be used in different countries. This will involve a problem that, when a same mobile phone or a mobile phone in a same type arrives in an each new place, a user needs to reset time, language and place information of the mobile phone; simultaneously, after each mobile phone is used for the first time or powered off for a long time, the user also needs to reset time, language and place information of the mobile phone; the user has to know the current time, place and language information in order to reset these information, which brings great inconvenience for the user.

CN 101 017 364 A refers to an automatic correction and update language system method, which reads global satellite positioning system user location information, time and date information data, determines time zone and time difference to a time information to local time and date data, corrects the electronic device to set the time and set the date for the local time and local date; and changes the language setting of the electronic device to comply with the time zone.

JP H07 55965 A refers to a computer system, which enables automatic time setting of a built-in clock by determining a reception coordinate position on the basis of information from an artificial satellite, by calculating a time difference of the position from the universal standard time and by determining the standard time of a region on the basis of this difference. Information of a linguistic zone of the reception coordinate position is determined by a linguistic zone calculating means and language setting for a main body of the computer system is executed automatically based on the information on the linguistic zone.

CN 101 754 367 A refers to a method for automatically setting a system language and a time zone according to GPS positioning. An automatic system language setting process and an automatic system time zone setting process determine the position information of the location of a mobile telephone by a built-in GPS module of the mobile telephone, further determine the commonly-used language and the corresponding world time zone of the location of the mobile telephone according to the obtained concrete position, and finally respectively set the commonly-used language and time zone of the location as the system language and the system time zone.

How to update the setup information of the mobile terminal in time according to a location of the mobile terminal in order to improve the humanization of the mobile terminal is one of the research directions of the field of mobile terminals.

An object of the present invention is to provide a method for updating the setup information of a mobile terminal, to update the setup information of the mobile terminal in time according to a location of the mobile terminal in order to improve the humanization of mobile terminals.

The invention is defined by independent claims 1, 5 and 8.

The embodiment of the invention is implemented as follows: a method for updating the setup information of a mobile terminal is provided, comprising the following steps:
- obtaining a positioned National Marine Electronics Association (NMEA) message is obtained through the Global Positioning System (GPS);
- interpreting the NMEA message to obtain information of a current time and a current position of a mobile terminal;
- inquiring a nation to which the current position belongs according to the position information, and reading a language type of the nation;
- updating the setup information of the mobile terminal according to the read language type and the current time.

According to an embodiment, after a positioned NMEA message is obtained through the GPS, the method further comprises:
- the GPS of the mobile terminal is turned off.

Another object of the embodiment of the invention is to provide a device for updating the setup information of a mobile terminal, comprising:
- an NMEA message obtaining module, configured to obtain a positioned NMEA message through the GPS;
- an NMEA message interpretation module, configured to interpret the NMEA message to obtain a current time and a current position information of a mobile terminal;
- a language type obtaining module, configured to inquire a nation to which the current position belongs according to the position information, and read language type of the nation;
- a setup information updating module, configured to update the setup information of the mobile terminal according to the read language type and the current time.

According to an embodiment, the device further comprises:
- a GPS control module, configured to control the ON/OFF of the GPS of the mobile terminal.

According to an embodiment, the position information is latitude and longitude of the current position.

Still another object of the embodiment according to the present invention is to provide a mobile terminal, and the terminal comprises a device for updating the setup information provided in the embodiment of the invention.

In the embodiment of the invention, the mobile terminal obtains the latitude and longitude information and time information of a current location according to the received GPS, obtains the nation to which the position belongs and the language of the nation according to the latitude and longitude information, updates the setup information of the mobile terminal according to the obtained language and time information, so as to be able to update the setup information of the mobile terminal in time according to the location of the mobile terminal, so that the humanization of mobile terminals is improved, and the popularization of mobile terminals is facilitated.

The aforementioned characteristics, features and advantages of the invention as well as the way they are achieved will be further illustrated in connection with the following examples and considerations as discussed in view of the figures.
- Fig. 1: is a flow chart of a method for updating the setup information of a mobile terminal, provided in an embodiment according to the present invention;
- Fig.2: is a structure diagram of a device for updating the setup information of a mobile terminal, provided in an embodiment according to the present invention.

To make the purposes, technical solutions and advantages of the invention more clear, the invention will be further described in details below with reference to drawings and embodiments. It should be understood that specific embodiment described herein is only used for explaining the invention, instead of limiting the invention.

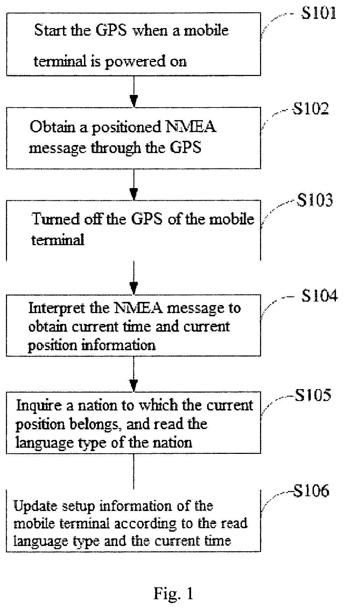

Fig.1 illustrates a flow of a method for updating the setup information of a mobile terminal, provided in an embodiment according to the present invention.

In step S101, when a mobile terminal is powered on, the GPS is started.

In step S102, a positioned NMEA message is obtained through the GPS.

In step S103, the GPS of the mobile terminal is turned off.

In step S104, the NMEA message is interpreted to obtain information of a current time and a current position of a mobile terminal; preferably, the position information is a latitude and a longitude of the current position, of course, it also may be position information in other forms, which will not be listed herein.

In step S105, a nation to which the current position belongs is inquired according to the position information, and a language type of the nation is read.

In step S106, the setup information of the mobile terminal is updated according to the read language type and the current time.

Take mobile phones as example, the setup information in mobile phones is generally stored in the file system, for example, a Non-Volatile Random Access Memory (NVRAM). Each kind of data will be stored in a specifically allocated position in the file system, and allocated with a fixed ID number that corresponds to the fixed physical storage position. When it is needed to update certain data, first, the specific position of the data in the file system is found according to the ID number corresponding to the data, and then new data is written into the proper position in the file system.

For example, when new time data is obtained, first a corresponding position in the file system is found according to an ID number that is allocated to the "TIME" setting item in advance, and then new "TIME" data is written into this position; after new data is written, a variable of "TIME" data in the memory is updated simultaneously, in this way, the display in the UI setting item will also be updated to new time. Similarly, data information of "LOCATION" and "LANGUAGE" may be updated.

Wherein, the NMEA message and the interpretation of the message are described as follows: most of GPSs follow the NMEA protocol. After the GPS of mobile phones is started, it continuously obtains positioning messages, for example, Recommended Minimum Specific GPS/TRANSIT Data ($ GPRMC), i.e., NMEA messages, and these positioning messages contain the current time and the current position information of mobile phones, for example, latitude and longitude.

Communication statements specified by the NMEA communication protocol have already been based on ASCII codes, and the data format of NMEA messages is as follows:
- " $ ": is the mark at the beginning of statements;
- ",": is the domain separator;
- "*": is the check and identification mark, the two numbers after it represent the checksum that is the checksum of all character codes between " $ " and "*", but not including " $ " and "*" two characters;
- "/": is the terminator, with which all statements must end, i.e., "CARRIAGE RETURN" and "LINE-FEEDS" of ASCII characters.

$ GPRMC data format is as follows:
$GPRMC,<1>,<2>,<3>,<4>,<5>,<6>,<7>,<8>,<9>,<10>,<11>,<12>*hh<CR><LF >

### Description of each field:

- $ GPRMC:: frame header;
- <1>: UTC time: hhmmss.sss;
- <2>: state: A/V;
- <3>: latitude: ddmm.mmmm;
- <4>: north latitude/south latitude: N/S;
- <5>: longitude: dddmm.mmmm;
- <6>: east longitude/west longitude: E/W;
- <7>: speed: section;
- <8>: azimuth: degree;
- <9>: UTC date: ddmmyy;
- <10>: magnetic declination: 000 -180;
- <11>: direction of magnetic declination: E/W;
- <12>: mode: A/D/E/N;
- *hh:: check;
- <CR><LF>:: carriage return and line-feeds.

### For example:

$GPRMC,121252.000,A,3958.3032,N,11629.6046,E,15.15,359.95,070306,,,A*54 where, field 1 and field 9 represent the time: Mar. 07, 2006 12:12:52;
field 3 and field 4 represent the latitude: 39°58.3032' N;
field 5 and field 6 represent the longitude: 116°29.6046' E.

Interpretation of GPRMC messages: data is sent by statements for NMEA messages, the GPS of mobile phones may receive statements in many types, but in the embodiment of the invention, only several fields in GPRMC messages are needed; therefore it is necessary to interpret the received data to obtain the wanted information:
first, the wanted messages are separated by a function, as each kind of messages begin with character $ and end with CR+LF, the function obtains the type of messages first from the header of each message, if the message is found to be $ GPRMC, the function reads the whole complete message, that is, from the message header $ to CR+LF, to start to interpret each field of the message.

As message $ GPRMC contains a lot of fields, and each field is separated by ",", "," is used as the separator, that is, a "," indicates the end of one field, the wanted fields are respectively read according to this sequence: first, field 1 is read to obtain the current year, month and day information; then field 9 is read to obtain the current hour, minute and second information; field 3 is read to obtain the north latitude and south latitude, and then field 4 is read to obtain the latitude information; field 5 is read to obtain east longitude and west longitude, and then field 6 is read to obtain the longitude.

Through the values of latitude and longitude in the current mobile phone, a corresponding nation is inquired in one table, and the language is inquired according to the nation after the nation is obtained. Wherein, this table defines the range of latitude and longitude of each nation: for example, the range of latitude and longitude of Britain is: 2°E to 7°W and 50°N to 58°N, if the mobile phone is within this range, it is indicated that the current position is in England.

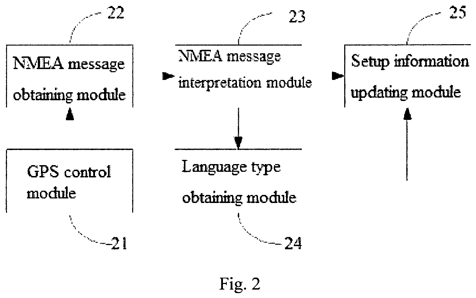

Fig.2 illustrates a structure of a device for updating the setup information of a mobile terminal, provided in an embodiment according to the present invention.
Wherein, GPS control module 21 is configured to control ON/OFF of the GPS of a mobile terminal;
NMEA message obtaining module 22 is configured to obtain a positioned NMEA message through the GPS;
NMEA message interpretation module 23, configured to interpret the NMEA message to obtain the current time and the current position information of a mobile terminal; preferably, the position information is the latitude and longitude of the current position;

Language type obtaining module 24 is configured to inquire a nation to which the current position belongs according to the position information, and read language type of the nation;

Setup information updating module 25 is configured to update the setup information of the mobile terminal according to the read language type and the current time.

The embodiment of the invention further provides a mobile terminal, and the terminal comprises the device for updating the setup information provided in the embodiment of the invention; as the device has been described in details above, it will not described again herein.

In the embodiment of the invention, the mobile terminal obtains the latitude and longitude information and time information of the current location according to the received GPS, obtains the nation to which the position belongs and the language of the nation according to the latitude and longitude information, updates the setup information of the mobile terminal according to the obtained language and time information, so as to be able to update the setup information of the mobile terminal in time according to the location of the mobile terminal, so that the humanization of mobile terminals is improved, and the popularization of mobile terminals is facilitated.

It should be understood that, for those skilled in the art, the invention may have modifications or alternations according to the above description, and these modifications and alternations should be included within the protection scope defined by the claims of the invention.

## Claims

1. A method for updating setup information of a mobile terminal, comprising the following steps:
- obtaining a positioned National Marine Electronics Association, NMEA, message through the Global Positioning System, GPS; (S102);
- interpreting the NMEA message to obtain current time and the current position information of the mobile terminal (S104);
- inquiring a nation to which the current position belongs according to the position information, and reading language type of the nation (S105);
- updating the setup information of the mobile terminal according to the read language type and the current time (S106),
- wherein the GPS of the mobile terminal is turned off and then the NMEA message is interpreted to obtain information of the current time and the current position (S103, S104).

2. The method according to claim 1, wherein after a positioned NMEA message is obtained through the GPS (S102), the method further comprises:
- the GPS of the mobile terminal is turned off (S103).

3. The method according to any of the preceding claims, wherein the position information is the latitude and longitude of the current position.

4. The method according to any of the preceding claims, wherein the language is inquired according to the nation after the nation is obtained.

5. A device configured for updating setup information of a mobile terminal comprising:
- an NMEA message obtaining module (22), configured to obtain a positioned NMEA message through the GPS;
- an NMEA message interpretation module (23), configured to interpret the NMEA message to obtain current time and the current position information of a mobile terminal;
- a language type obtaining module (24), configured to inquire a nation to which the current position belongs according to the position information, and read language type of the nation;
- a setup information updating module (25), configured to update the setup information of the mobile terminal according to the read language type and the current time; and
- a GPS control module (21), configured to control the ON/OFF of the GPS of the mobile terminal,
- wherein the device is configured to turn off the GPS of the mobile terminal and then to interpret the NMEA message to obtain information of the current time and the current position.

6. The device according to claim 5, wherein the position information is latitude and longitude of the current position.

7. The device according to any of claims 5 to 6, configured to inquire the language according to the nation after the nation is obtained.

8. A mobile terminal comprising the device configured for updating setup information according to any one of the claims 5 to 7.

## Patentansprüche

1. Verfahren zum Aktualisieren von Einrichtinformationen eines mobilen Endgeräts, das die folgenden Schritte umfasst:
- Erhalten einer positionierten Nachricht der Nationalen Vereinigung für Marineelektronik (NMEA-Nachricht) durch das Globale Positionsbestimmungssystem, GPS, (S102);
- Interpretieren der NMEA-Nachricht, um die aktuelle Uhrzeit und die aktuellen Positionsinformationen des mobilen Endgeräts (S104) zu erhalten;
- Erfragen eines Landes, zu dem die aktuelle Position gemäß den Positionsinformationen gehört, und Lesen des Sprachtyps des Landes (S105);
- Aktualisieren der Einrichtinformationen des mobilen Endgeräts gemäß dem gelesenen Sprachtyp und der aktuellen Uhrzeit (S106),
- wobei das GPS des mobilen Endgeräts ausgeschaltet wird und die NMEA-Nachricht dann interpretiert wird, um Informationen über die aktuelle Uhrzeit und die aktuelle Position (S103, S104) zu erhalten.

2. Verfahren nach Anspruch 1, wobei dann, wenn eine positionierte NMEA-Nachricht durch das GPS (S102) erhalten worden ist, das Verfahren ferner Folgendes umfasst:
- das GPS des mobilen Endgeräts wird ausgeschaltet (S103).

3. Verfahren nach einem der vorhergehenden Ansprüche, wobei die Positionsinformationen der Breitengrad und der Längengrad der aktuellen Position sind.

4. Verfahren nach einem der vorhergehenden Ansprüche, wobei die Sprache gemäß dem Land erfragt wird, nachdem das Land erhalten worden ist.

5. Vorrichtung, die zum Aktualisieren von Einrichtinformationen eines mobilen Endgeräts konfiguriert ist und Folgendes umfasst:
- ein Modul (22) zum Erhalten von NMEA-Nachrichten, das konfiguriert ist, eine positionierte NMEA-Nachricht durch das GPS zu erhalten;
- ein Modul (23) zum Interpretieren von NMEA-Nachrichten, das konfiguriert ist, die NMEA-Nachricht zu interpretieren, um die aktuelle Uhrzeit und die aktuellen Positionsinformationen eines mobilen Endgeräts zu erhalten;
- ein Modul (24) zum Erhalten von Sprachtypen, das konfiguriert ist, ein Land, zu dem die aktuelle Position gemäß den Positionsinformationen gehört, zu erfragen und einen Sprachtyp des Landes zu lesen;
- ein Modul (25) zum Aktualisieren von Einrichtinformationen, das konfiguriert ist, die Einrichtinformationen des mobilen Endgeräts gemäß dem gelesenen Sprachtyp und der aktuellen Uhrzeit zu aktualisieren; und
- ein GPS-Steuermodul (21), das konfiguriert ist, den EIN-/AUS-Zustand des GPS des mobilen Endgeräts zu steuern,
- wobei die Vorrichtung konfiguriert ist, das GPS des mobilen Endgeräts auszuschalten und dann die NMEA-Nachricht zu interpretieren, um Informationen über die aktuelle Uhrzeit und die aktuelle Position zu erhalten.

6. Vorrichtung nach Anspruch 5, wobei die Positionsinformationen der Breitengrad und der Längengrad der aktuellen Position sind.

7. Vorrichtung nach einem der Ansprüche 5 bis 6, die konfiguriert ist, die Sprache in dem Land zu erfragen, nachdem das Land erhalten worden ist.

8. Mobiles Endgerät, das die Vorrichtung umfasst, die zum Aktualisieren der Einrichtinformationen nach einem der Ansprüche 5 bis 7 konfiguriert ist.

## Revendications

1. Procédé permettant de mettre à jour des informations de réglage d'un terminal mobile, comprenant les étapes suivantes :
- obtenir un message de la National Marine Electronics Association, NMEA, par l'intermédiaire du système de localisation par satellite, GPS (S102) ;
- interpréter le message NMEA pour obtenir l'heure courante et les informations de position courantes du terminal mobile (S104) ;
- demander une nation à laquelle la position courante appartient selon les informations de position, et lire un type de langue de la nation (S105) ;
- mettre à jour les informations de réglage du terminal mobile selon le type de langue lu et l'heure courante (S106),
- le GPS du terminal mobile étant désactivé, puis le message NMEA étant interprété pour obtenir des informations de l'heure courante et de la position courante (S103, S104).

2. Procédé selon la revendication 1 dans lequel, après qu'un message NMEA positionné a été obtenu par l'intermédiaire du GPS (S102), le procédé comprend en outre :
- le GPS du terminal mobile est désactivé (S103).

3. Procédé selon l'une quelconque des revendications précédentes, dans lequel les informations de position sont la latitude et la longitude de la position courante.

4. Procédé selon l'une quelconque des revendications précédentes, dans lequel la langue est demandée selon la nation après que la nation a été obtenue.

5. Dispositif configuré pour mettre à jour des informations de réglage d'un terminal mobile comprenant :
- un module d'obtention de message NMEA (22), configuré pour obtenir un message NMEA positionné par l'intermédiaire du GPS ;
- un module d'interprétation de message NMEA (23), configuré pour interpréter le message NMEA afin d'obtenir une heure courante et les informations de position courantes d'un terminal mobile ;
- un module d'obtention de type de langue (24), configuré pour demander une nation à laquelle la position courante appartient selon les informations de position, et le type de langue lu de la nation ;
- un module de mise à jour d'informations de réglage (25), configuré pour mettre à jour les informations de réglage du terminal mobile selon le type de langue lu et l'heure courante ; et
- un module de contrôle GPS (21), configuré pour contrôler la marche/arrêt du GPS du terminal mobile,
- le dispositif étant configuré pour désactiver le GPS du terminal mobile, puis pour interpréter le message NMEA afin d'obtenir des informations de l'heure courante et de la position courante.

6. Dispositif selon la revendication 5, dans lequel les informations de position sont la latitude et la longitude de la position courante.

7. Dispositif selon l'une quelconque des revendications 5 à 6, configuré pour demander la langue selon la nation après que la nation a été obtenue.

8. Terminal mobile comprenant le dispositif configuré pour mettre à jour des informations de réglage selon l'une quelconque des revendications 5 à 7.
